(19) **Europäisches Patentamt / European Patent Office / Office européen des brevets**

(11) **EP 1 677 086 B1**

(12) **EUROPEAN PATENT SPECIFICATION**

(45) Date of publication and mention
of the grant of the patent:
**04.09.2013 Bulletin 2013/36**

(51) Int Cl.:
**G01J 3/453** (2006.01)

(21) Application number: **05028287.0**

(22) Date of filing: **23.12.2005**

(54) **Fourier transform spectrometer**

Fourier-Transformationsspektrometer

Spectromètre par transformée de Fourier

(84) Designated Contracting States:
**DE**

(30) Priority: **30.12.2004 US 640190 P**

(43) Date of publication of application:
**05.07.2006 Bulletin 2006/27**

(73) Proprietor: **Fraunhofer-Gesellschaft zur
Förderung der
angewandten Forschung e.V.
80686 München (DE)**

(72) Inventors:
  • **Urey, Hakan
    Sariyer
    34450 Istanbul (TR)**
  • **Ataman, Caglar
    34394 Mecidiyeköy,Sisli
    Istanbul (TR)**

(74) Representative: **Pfenning, Meinig & Partner GbR
Patent- und Rechtsanwälte
Theresienhöhe 13
80339 München (DE)**

(56) References cited:
  • **O. MANZARDO, R. MICHAELY, F. SCHÄDELIN, W. NOELL, TH. OVERSTOLZ, N. DE ROOIJ, H. P. HERZIG: "Miniature lamellar grating interferometer based on silicon technology" OPTICS LETTERS, vol. 29, no. 13, 1 July 2004 (2004-07-01), pages 1437-1439, XP002376793**
  • **W. NOELL, P.-A. CLERC, L. DELLMANN, B. GULDIMANN, H. P. HERZIG, O. MANZARDO, C. R. MARXER, K. J. WEIBLE, R. DÄNDLIKER, N. DE ROOIJ: "Applications of SOI-based optical MEMS" IEEE J. SEL. TOP. QUANTUM ELECTRONICS, vol. 8, no. 1, 1 February 2002 (2002-02-01), pages 148-154, XP002376794**
  • **R. HOFFMANN, S. DRAPATZ, K. W. MICHEL: "Lamellar grating Fourier spectrometer for a balloon-borne telescope" INFRARED PHYSICS, vol. 17, 1977, pages 451-456, XP002376795**
  • **BHALOTRA S R ET AL: "Parallel-plate MEMS mirror design for large on-resonance displacement" OPTICAL MEMS, 2000 IEEE/LEOS INTERNATIONAL CONFERENCE ON 21-24 AUGUST 2000, PISCATAWAY, NJ, USA,IEEE, 21 August 2000 (2000-08-21), pages 93-94, XP010518553 ISBN: 0-7803-6257-8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a Fourier transform spectrometer comprising a binary grating with variable depth, the grating comprising a first set of mirrors and a second set of mirrors, the mirrors of the first set and the mirrors of the second set being arranged in an alternating order and at least one of the set of mirrors being carried by fingers of a comb structure of a device, the spectrometer further comprising an actuator for prompting a motion of the second set of mirrors and a detector for detecting a radiation - typically light - reflected by the grating. Such a spectrometer may be designed e.g. for chemical, biological and agricultural inspection applications.

A normal Fourier transform spectrometer (FTS) is a Michelson interferometer with a movable mirror. By scanning the movable mirror over some distance, an interference pattern (interferogram), which encodes the spectrum of the source, is produced. This encoding interference pattern is actually the Fourier transform of the spectrum of the source. Therefore, capturing the interferogram with a 2-D array of detectors and Fourier transforming it will lead to information on spectral content of the source.

The invention of Fourier Transform Spectroscopy coincides with the A. Michelson's invention of the Michelson interferometer in 1880. However, due to the lack of sensitive detector arrays and Fourier Transforming computers, FTS did not become a common interferometric measurement technique, until recently. Fast detector arrays, efficient Fourier Transform algorithms and increasing computer power of microprocessors enabled FTS to become a well-known and widely-used measurement technique. It is a powerful tool to measure the spectra of weak extended sources, since it offers distinct throughput and multiplexing advantages, providing higher signal-to-noise ratio performance compared with other methods. Today, commercial Fourier transform spectrometers are widely available. Aided by fast computers which perform Fourier transforms in a flash, visible, infrared, and microwave Fourier transform spectrometers are common laboratory instruments used for spectroscopy in many diverse disciplines.

A Lamellar Grating Interferometer (LGI) is a FTS based on a diffraction grating operating in the zeroth order. An LGI has many advantages over a standard FTS, such as the need for only a single detector instead of a detector array, lack of a beam-splitter, and speed. Moreover, simpler operation principle and fewer optical components enable us to built very compact spectrometers with reasonable performance.

A state of the art spectrometer of the kind defined above has the mirrors forming the binary grating placed on a side wall of the device, the actuator prompting a motion of the movable mirrors in a direction in the wafer plane. As a consequence, the mirrors have only a very small surface - resulting in a fairly low optical efficiency - and the motion of the movable mirrors is limited by the device geometry so that only a very limited optical path difference can be generated between two parts of a wave reflected by the fixed and the movable mirrors respectively.

O. Manzardo, R. Michaely, F. Schädelin, W. Noell, Th. Overstolz, N. de Rooij, H.P. Herzig "Miniature lamellar grating interferometer based on silicon technology" Optics Letters, vol. 29, no. 13, 1 July 2004 (2004-07-01), pages 1437-1439, XP002376793 shows a lamellar grating interferometer with a fixed set of mirrors and a mobile set of mirrors wherein the mirrors of the two sets of mirrors are arranged in an alternating order and are carried by a comb-like structure.

R. Hoffmann, S. Drapatz, K.W. Michel "Lamellar grating Fourier spectrometer for a balloon-borne telescope" Infrared Physics, vol. 17, 1977, pages 451-456, XP002376795 shows a lamellar grating interferometer which is especially suitable for balloon-borne experiments. This interferometer has been designed in a way that its performance does not depend significantly on the wavelength and polarization of the incoming radiation.

It is the object of the present invention to provide a spectrometer allowing a higher spectral resolution and furthermore rendering possible the analysis of weaker sources compared to the state of the art.

This object is achieved by a Fourier transform spectrometer according to claim 1 and by a method for producing a corresponding spectrometer, according two claim 9. Preferred developments of the invention are given by claims 2 to 8.

By the fact, that the mirrors are orientated in a plane defined by the device and that the motion of the second set of mirrors prompted by the actuator is given by a translation in a direction vertical to the wafer plane (device plane), at least two advantages are realized. As the motion of the mirrors is out-ofplane, the travel range of those mirrors is not limited any more by neighboured parts of the device. Therefore, a much larger optical path difference can be realized by a - typically oscillating - mouvement of the movable mirrors, resulting in a significantly improved spectral resolution of the spectrometer. Furthermore, as the mirrors are orientated in the device-plane corresponding to the original wafer plane, the mirrors can be laid out with a comparably large surface so that the device is also suited for the analysis of comparably weak sources due to an increased active surface.

In typical embodiments of the invention, only the second set of mirrors is given by a set of movable mirrors, whereas the first set of mirrors is given by a faxed set of mirrors. However, the spectrometer can also have both sets of fingers moving if they move with a phase shift, ideally with 180° phase in between. In the following, the first set of mirrors is referred to as the fixed set of mirrors and the second set of mirrors as the movable set of mirrors, knowing that the same is true for embodiments with both sets of mirrors being movable. (In that case, an out-of-plane motion of both sets of mirrors is prompted by the actuator).

In a preferred embodiment of the invention, the actuator is given by an electric comb drive actuator being formed by a comb structure carrying (or serving as substrate for) the mirrors. I.e. the fingers of said comb structure are at least part of the actuator, typically serving as electrodes. In that case, the fingers of the comb structure are used both for the actuation and for the optical functionality as mirrors of the grating or as substrates for those mirrors. In that way, a simple device can be realized minimizing size, complexity, costs, and design effort of the spectrometer. Typically, both sets of mirrors will be carried by fingers of a comb structure, the comb structures penetrating each other. The mirrors can be given by a surface of said fingers themselves or by a coating layer on the fingers. To this end, the fingers of the comb structure can e.g. be covered with aluminium.

In a typical embodiment of the invention, the set of movable mirrors is elastically connected to the set of fixed mirrors by suspension means allowing an oscillating movement of the set of movable mirrors.

In a particularly simple embodiment of the invention, allowing a small and cheap realization of the spectrometer, the comb structure carrying the fixed mirrors and the suspension means are formed integrally with one another, typically made on one single wafer. The set of movable mirrors can also be made of a bond of several wafers to extend the travel range of the resulting actuator.

A corresponding device as well as the wafer, where it is made from, typically comprises at least one silicon layer which is preferably heavily doped for having a sufficiently high electrical conductivity. Typically, a silicon-on-insulator wafer will be used, the silicon layer preferably being arranged on a supporting substrate by means of an insulating layer, said supporting substrate being removed at least in an area defined by the set of movable mirrors.

A preferred method for producing a corresponding spectrometer comprises the following steps in the given order:

- A single crystal silicon layer (e.g. an epitaxial layer) of a silicon-on-insulator wafer - preferably a heavily doped silicon layer - is structured - e.g. by etching - so as to define an oscillating body with a comb structure for carrying the movable mirrors, a frame with a comb structure for carrying the fixed mirrors, and suspension means connecting the oscillating body with the frame.
- A back etching process is carried out for removing a supporting substrate and an insulator layer which separates the supporting substrate from said single crystal silicon layer, at least below the oscillating body.

The fingers of the comb structures can finally be covered, e.g. with aluminium, to form the mirrors. If different parts of the silicon layer of the wafer shall be electrically insulated from each other, e.g. a part defining the set of movable mirrors from a part defining the set of fixed mirrors, insulation trenches can be realized in the single crystal silicon layer while this layer is structured and the insulation trenches can be refilled, e.g. with poly-silicon, after a growing of a layer of an insulating oxide on edges of the trenches. A feature of this last process is that filled insulation trenches separate regions of the wafer electrically but connect them mechanically. This can have great advantages, especially if the comb structures are used both for carrying the mirrors and as a comb drive actuator for prompting the motion of the movable mirrors.

Most preferably, a silicon-on-insulator wafer with a silicon layer of between 20 $\mu$m and 40 $\mu$m thickness and/or a thermal buried oxide layer of between 0,5 $\mu$m and 1,5 $\mu$m serving as insulation layer is used. The supporting substrate will usually have a thickness of between 300 $\mu$m and 450 $\mu$m.

In order to achieve a small system size enabling portable devices with nevertheless high efficiency, the fingers of the comb structure can be made with a length of between 800 $\mu$m and 1600 $\mu$m and/or a width of between 50 $\mu$m and 100 $\mu$m. However, also a diffraction grating period of only a few microns would still function as desired.

The detector, typically a photo diode, can be placed to measure an intensity of a zeroth order of a diffraction pattern generated by the grating, i.e. usually in a central maximum of the diffraction pattern.

In order to prompt an oscillating motion of the set of movable mirrors, the spectrometer can further comprise a control device for applying an alternating voltage between electrodes of the actuator, the electrodes typically being given by the fingers of the comb structure. The spectrometer and/or the control device are most preferably designed in a way that an oscillation of the set of movable mirrors in a translational out-of-plane resonant mode (typically the fundamental mode of the system) is generated. In this way, a Fourier transform of the spectrum is scanned during an oscillation period. To this end, the control device can additionally comprise means for detecting zero passages of the oscillation of the movable mirrors, given e.g. by an optical detector. The control device can further be arranged to reduce the voltage to a minimum value substantially at each zero passage of the oscillation and/or to increase the voltage applied between the electrodes to a maximum value at each maximum deflection of the set of movable mirrors. In order to permit an oscillation build-up of the oscillating body, an asymmetry can be provided of the system given by the movable mirrors, the suspension means, and the fixed mirrors.

In the following, examples of embodiments of the present invention will be explained in detail making reference to the drawings 1 to 10,

Figure 1 showing a schematic top view of a wafer forming a part of a Fourier transform spectrometer according to the present invention,

Figure 2 showing a measured hysteretic response of an actuator of the same spectrometer,

Figure 3 showing a spectral resolution of the same spectrometer for $\pm$ 50 $\mu$m vertical deflection assuming two monochromatic sources at wave lengths 500 nm and 500,9 nm in diagram a) and at wave lengths 1000 nm and 1004 nm in diagram b),

Figure 4 showing a schematic top view of a wafer with an alternative design for a spectrometer according to the invention,

Figure 5 showing an exploded illustration of a corresponding binary grating for a spectrometer according to the invention made of three wafers showing an enhancement of comb finger travel range by multiple wafer bonding,

Figure 6 showing a schematic illustration of a binary diffraction grating and modulation of the zeroth order of a diffraction pattern depending on a depth d of the grating,

Figure 7 showing a top view of a wafer for a grating of a spectrometer according to the invention with a preferred layout of the grating,

Figure 8 showing a top view of a detail of the same grating with spectrometer dimensions,

Figure 9 showing a top view of another detail of the same spectrometer, namely a spring connecting a fixed part of the wafer with a movable part of the wafer with flexure dimensions,

Figure 10 showing two diagrams illustrating the separation of neighboured diffraction orders when two periods of the gratings are illuminated (a) or when ten periods of the grating are illuminated (b) respectively.

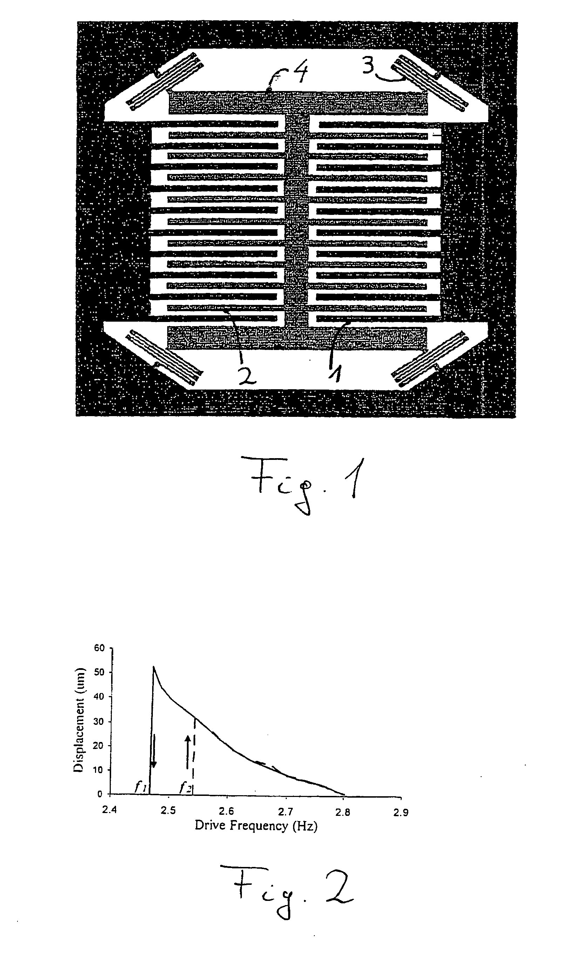

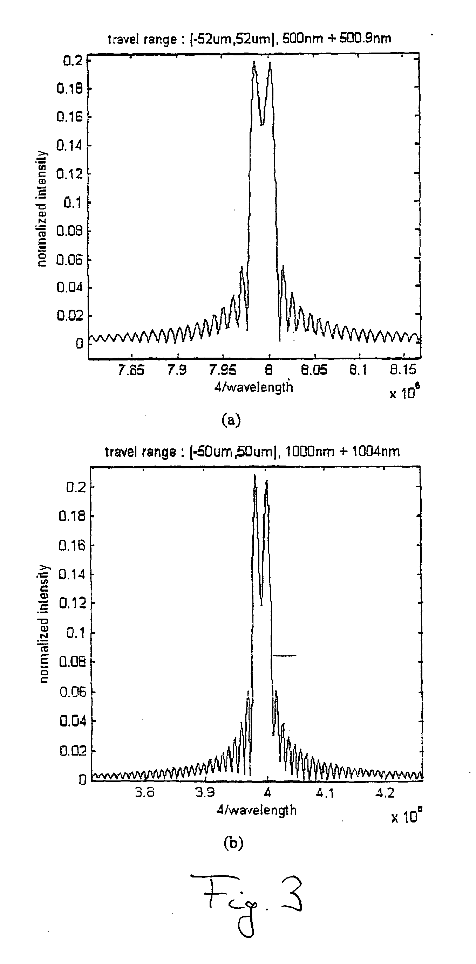

Figure 1 illustrates the top view of an out-of-plane moving diffraction grating structure. The shown structure is made of one single silicon-on-insulator wafer and part of a Fourier transform spectrometer. The grating comprises a set of fixed mirrors being carried by fixed fingers 1 and a set of movable mirrors being carried by movable fingers 2 of a comb structure, the fixed fingers and the movable fingers being arranged in an alternating order and the mirrors being given by an aluminium coating of the fingers 1 and 2. The movable mirrors and the fixed mirrors are orientated in a plane defined by the wafer. The set of movable fingers 2 is elastically connected to the set of fixed fingers 1 by suspension means 3 given by four springs or flexures allowing a translational out-of-plane oscillation of the set of movable fingers 2 with respect to the set of fixed fingers 1. The comb structure carrying the fixed mirrors, the comb structure carrying the movable mirrors and the suspension means 3 are formed integrally with one another. The comb structures with the fixed fingers 1 and the movable fingers 2, at the same time, form an electric comb drive actuator for prompting a motion of the set of movable fingers 2 with the movable mirrors, said motion being given by a translation in a direction vertical to the wafer plane and resulting in said out-of-plane oscillation. To this end, the spectrometer further comprises a control device for applying an alternating voltage between the fixed fingers 1 and the movable fingers 2, those fingers 1 and 2 forming electrodes of the actuator.
Finally, the Fourier transform spectrometer also comprises a photodiode as a detector for detecting light reflected by the grating. The detector, which is not shown in the figure, is placed to measure an intensity of a zeroth order of a diffraction pattern generated by the grating.
The current configuration has larger clear aperture, simpler fabrication, and higher efficiency compared to other MEMS spectrometers (MEMS standing for micromechanical systems).
The use of the polished top surface and out-of-plane actuation produces good flatness and a large clear aperture (3 mm x 3 mm) for the incident beam. Since the structure utilizes the zeroth order diffracted light without requiring additional optics or beam splitters, the optical efficiency is > 90 % and limited only by the fill-factor of the comb figures 1 and 2. The tested devices are capable of producing $\pm$ 52 $\mu$m at 28 V with square wave excitation near the resonant frequency of about 1,3 kHz.
The comb fingers 1 and 2 have a high fill-factor (70 $\mu$m finger width and 5 $\mu$m gap) and are covered with a thin aluminium layer. Movable comb fingers 2 are connected to a 250 $\mu$m wide H-shaped Silicon backbone 4 (not coated with aluminium) to increase rigidity and then to the fixed frame via four folded flexure beams serving as suspension means 3. Flexures have varying cross-sectional width to have uniform stress distribution and to provide low stiffness within a compact structure. Low stiffness springs lower the resonant frequency and the readout electronics speed requirements, and increase the deflection, which improves the spectral resolution. The flexures are placed at a 45 ° angle to obtain a better mode separation between the fundamental translation mode and higher order torsional modes.
The structure is balanced and does not operate at DC. The structure responds only to a narrow range of frequencies near its resonance and shows a hysteretic frequency response as given in figure 2. Maximum oscillation amplitude can only be observed sweeping down the excitation frequency once the oscillation started. Figure 3 shows the results of the spectral resolution simulations assuming 50 $\mu$m out-of-plane deflections and yields a spectral resolution of 1 nm in the visible band and better than 9 nm around 1,5 $\mu$m wave band.

The spectrometer is fabricated on silicon-on-insulator (SOI) wafer with a CMOS compatible process. The 30 $\mu$m thick structural layer is highly doped to maintain conductivity. For the definition of wire-bond electrodes, an oxide and a metal layer is deposited on the structural layer and then patterned. On the backside of the wafer, a hard mask consisting of an oxide and a nitride layer is patterned for a further backside etching step. Then, a 100 nm thick aluminium layer is deposited on the movable and fixed fingers to enhance reflectivity. Following to that, the substrate under the mechanical elements and the buried oxide are removed in a TMAH and an HF solution, respectively. Finally, the mechanical elements are released by a deep silicon etch process.

The method for producing the spectrometer shown in figure 1 particularly comprises the following steps:

An epitaxial layer of the silicon-on-insulator wafer is structured so as to define an oscillating body comprising the backbone 4 and the movable fingers 2, a frame with a comb structure for carrying the fixed mirrors (the fixed fingers 1), and the suspension means connecting the oscillating body with the frame. Afterwards, a back etching process is carried out for removing a supporting substrate and an insulator layer which separates the supporting substrate from said epitaxial layer at least below the oscillating body. The epitaxial layer is given by a 30 $\mu$m silicon-layer, the insulating layer by a layer of thermal buried oxide of approximately 1 $\mu$m thickness. The whole wafer has a thickness of roughly 400 $\mu$m. The aluminium mirror layer has a thickness of about 100 nm. A part of the frame including the fixed fingers 1 is electrically insulated from the back bone with the movable fingers 2. This is achieved by filled insulation trenches that separate regions of the silicon electrically, but connect them mechanically. In this way, the silicon-on-insulator wafer is structured into different electrodes and their electrical interconnections by a process as follows:

Fabrication starts with an anisotropic etch in plasma of 1 $\mu$m wide and 30 $\mu$m deep trenches with stop on the buried oxide (DRIE). Thermal oxidation then grows 180 nm insulating oxide. Trenches are refilled with poly-silicon for the mechanical connection. Access poly-silicon is removed from the surface by chemical mechanical polishing (CMP).

The next steps realize the bond pads: 750 nm PE-CVD of an interlayer insulation oxide, etching via holes, sputter deposition of bond pad aluminium, structured metal etch, 300 nm PE-CVD of a passivation oxide. The following structured oxide etch opens the blank silicon surface. Only bond pad metal and the filled insulation trenches remain covered. At this process step, electrical measurement monitors the insulation resistances of the filled trenches.

In order to prepare the anisotropic backside wet etch, the wafers are then grinded from the backside to 400 $\mu$m thickness, a multiple layer hard mask is deposited by PE-CVD and structured. E-beam evaporation on the front side then deposits a 100 nm thick aluminium mirror layer, which is structured by wet etching and protected by a resist coating.

During the anisotropic backside wet etch, the front sides are protected by vacuum etch boxes. TMAH is used rather than KOH because of its better selectivity to the PE-CVD hard mask. After the etch stop on the buried oxide, the buried oxide is removed in buffered fluorine acid. A 30 $\mu$m thick silicon membrane remains.

In the last etch step, the mechanical elements mirror plate and torsional springs are defined by 5 $\mu$m wide trenches that are etched anisotropically (DRIE) through the membrane. The micro scanning mirrors can now be operated on wafer-level in the MEMS end-test.

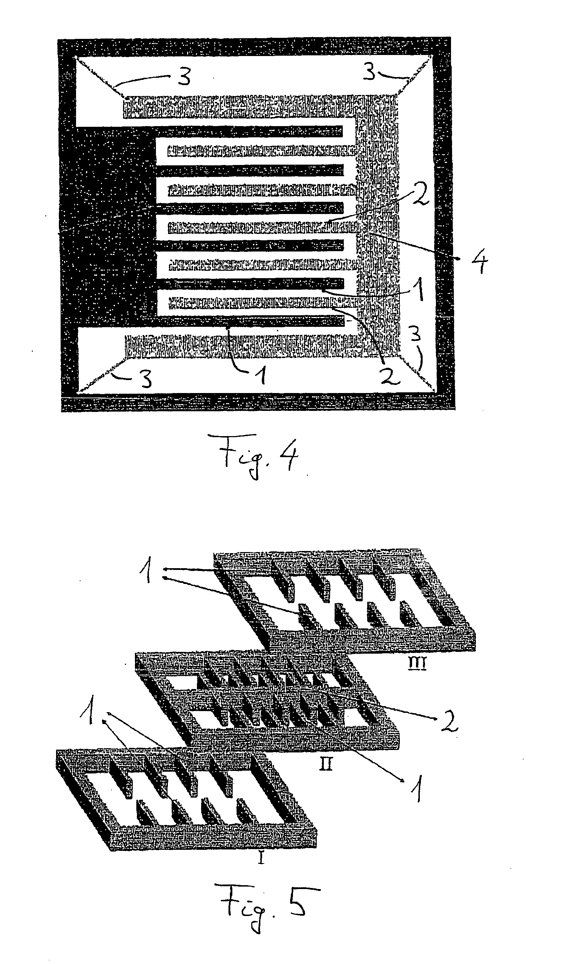

In the figures 4 to 9, corresponding features of the shown embodiments of the invention are marked with the same reference figures as in figure 1. In the following, the invention is explained in more detail.

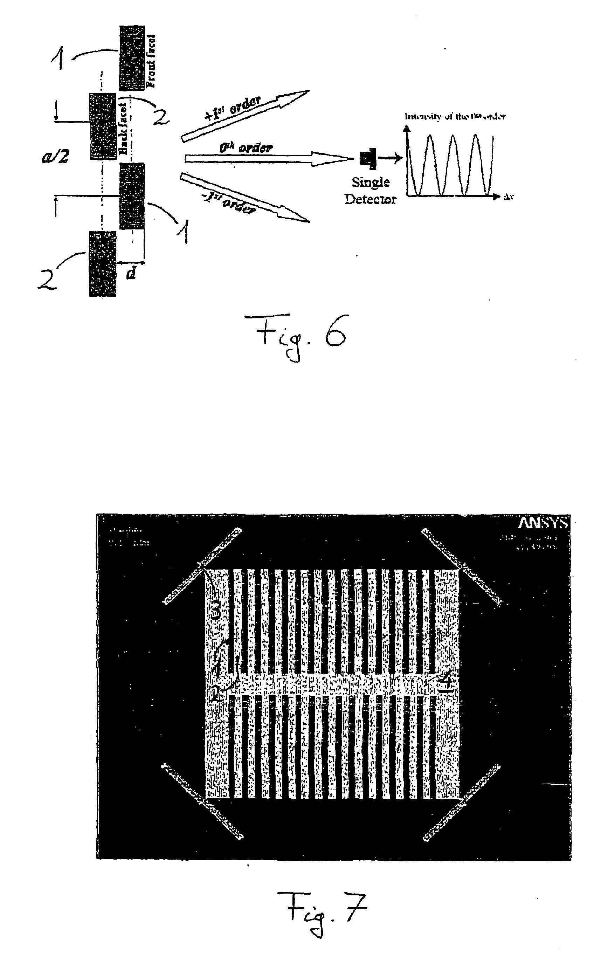

Whenever a portion of a wavefront, be it sound, a matter wave, or light, is obstructed in some way, the propagation of wave deviates from the rectilinear path. This effect is called diffraction and plays an important role in theory of wave propagation. A repetitive array of diffraction elements, either apertures or obstacles, that has the effect of producing periodic alterations in the phase, amplitude, or both of an emergent wave is said to be a diffraction grating. If these repetitive (periodic) diffraction elements are of rectangular shape, the resulting structure is called rectangular diffraction grating. Figure 6 shows two periods of a rectangular comb-drive diffraction grating.

The grating introduces a rectangular phase function to the illuminated uniform wavefront, due to the phase difference between the portions of the wavefront reflected from the front and back facets of the grating. This phase difference is given by the following expression

$$\phi = \left( \frac{2\pi d}{\lambda} \right) \left[ (1 + \cos\alpha) + \frac{a}{2d} \sin\alpha \right]$$

where a is the grating period, α is the distance between the front facets and the back facets in a direction vertical to the grating plane, α is the diffraction angle, and λ is the wavelength of the light. The intensity profile of the diffracted light will be transformed due to the diffraction phenomenon as the light propagates. Right after the grating, diffracted light has the identical profile as the grating. Far field (Fraunhofer) diffraction pattern of the light will have the shape of the Fourier transform of the diffraction grating. The far-field intensity profile of the light diffracted from the grating in figure 6 is given as:

$$I(\alpha) = A \left[ \frac{\sin\left( \pi a \dfrac{\sin\alpha}{2\lambda} \right)}{\pi a \sin\left( \dfrac{\sin\alpha}{2\lambda} \right)} \right]^2 \left[ \frac{\sin\left( N\pi a \dfrac{\sin\alpha}{\lambda} \right)}{\sin\left( \pi a \dfrac{\sin\alpha}{\lambda} \right)} \right]^2 \cos^2(\phi)$$

where N is the number of illuminated periods and A is a scaling factor depending on the structure dimensions. The total intensity has three discrete components. The first term has a sinc shaped profile, due to the rectangular shape of the grating. Its width is inversely proportional to the period of the grating, since it is simply the square of the Fourier Transform of the rectangular grating. The second term is a sinc train, resulting from the periodicity of the grating. As the grating period shrinks, the distance between the consecutive orders (diffraction angle) increases. Each order has sinc shape, since the illuminated light is assumed to have a finite profile of rectangular length. Spot-size of these orders shrinks as N increases. In the ideal case, where illuminating light is of infinite span, the second term becomes an impulse train. The third term is the only term that modulates the intensity profile based on the amount of phase difference introduced by the grating.

At the center of the diffraction plane, the first two terms are equal to unity. Therefore, intensity at the center is only modulated by the third intensity component. This can be mathematically seen by setting the diffraction angle α to zero in the previous equation. Resultant intensity function is given by

$$I = A \cos^2\left( \frac{4\pi d}{\lambda} \right).$$

This equation implies that at the center of the diffraction plane, the light intensity is related to the wavelength of the diffracted light. This property of rectangular diffraction gratings may be exploited to figure out the spectral content of the diffracted light. If one of the front or back facets of the diffraction grating in figure 6 moves periodically along a sufficient travel range, intensity at the center of the diffraction plane will be modulated depending on the wavelength content of the diffracted light. A fast photodetector that is placed at the center of the diffraction plane would capture the intensity modulation. The captured data is called an interferogram. Applying a short-time Fourier Transform operation to the interferogram will lead to the spectral content of the diffracted light.

Due to the periodicity of the figures, comb actuators can be utilized as a tunable phase (diffraction) grating. If a comb actuator is illuminated with a laser beam of enough width to cover multiple periods, the light will be diffracted into many orders as explained above. Therefore, a vertical sliding mode comb actuator can be utilized as a tunable rectangular diffraction grating, which is a good candidate for Lamellar Grating Interferometry. If a resonating comb structure is used as a diffraction grating, the intensity recorded by a detector placed at the center of the diffraction plane would be

$$I = A \cos^2\left( \frac{4\pi d_{max} \cos 2\pi f_{res} t}{\lambda} \right)$$

where $f_{res}$ is the resonant frequency of the comb structure. A fast photodetector placed on the center would successfully record the interferograms, which encode the desired spectral content information. However, due to the harmonic motion of the actuator, before the Fourier transform operation, the interferogram data need to have a phase correction.

Modal analysis of comb-driven microscanners showed that it is also possible to actuate those devices in the torsional mode. Therefore, a similar structure can be utilized as a candidate for a Fourier Transform Spectroscope (FTS). However, some major modifications in the microscanner structure are necessary to satisfy some demanding requirements of spectroscopy. Major issues that need to be addressed in spectrometer design are discussed in the following.

The most important specification of a spectrometer is the spectral resolution. A potential LDI design should provide a reasonable resolution in order to be distinguished among many other spectrometers in the market. If the detector and Fourier transforming electronics are sufficiently fast, minimum detectable wavelength difference for a LGI is given by the following formula:

$$\Delta \lambda = \frac{\lambda^2}{d_{max}}$$

According to this, the resolution of an LGI spectrometer is inversely proportional to the wavelength of the illuminating light. A more important result is the dependence of resolution to the maximum travel range. In order to improve the spectral resolution, the travel range of the device is needed to be increased. This constraint sets one of the most important mechanical design objectives.

For spectroscopy application, one is only interested in the intensity of the zeroth order diffraction; therefore, the light going to this order should be well-separated from the light going to other orders. To achieve good separation between orders, small focused spot size on the detector plane and large angle between diffracted orders is desired. This is achieved by illuminating a large number of grating periods by the incoming beam.

In order to loosen the speed requirements on the detector at the diffraction plane, the oscillation frequency of the device should be kept relatively low, but not too low as the spectrum can change during data collection. Therefore, a specific data rate can be reached with a slower/cheaper detector; or a higher data rate can be maintained with the same detector. Speed and amount of data flow through the detector is crucial, since both of these parameters may degrade system performance, if requirements are not satisfied.

Operation Voltage of the device should be kept below 70 V. Electrical insulation of the comb-finger pairs will be accomplished by insulation trenches, which can withstand a maximum potential of 70 V.

Fundamental oscillation mode of the device should be the vertical sliding mode. Good mode separation should be maintained (e.g. natural frequencies for second and higher modes should be sufficiently bigger than fundamental natural frequency) by properly designing the flexure beams.

For safe operation, DC the pull-in voltage of the device should be higher than the typical operation voltage of the device.

During the microfabrication and packaging process, the device may experience mechanical shocks as strong as 2000 times the gravitational acceleration. If the device breaks downs during fabrication, as a result of such a shock, it may damage the process. The flexures of the device should be designed to withstand such large acceleration forces without breakage.

A number of design iterations were went through to meet the mechanical, electrical and optical requirements given in the previous section. The optimum performance was obtained from the design given in figure 7 which is similar to the one shown in fig. 1.

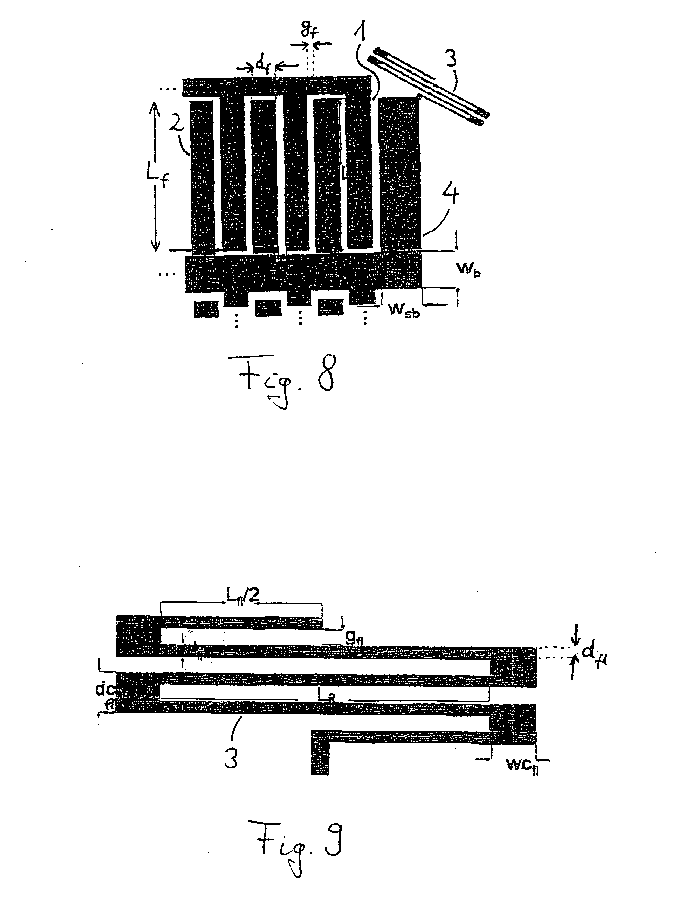

The device has 14 pairs of comb fingers 1 and 2 which are 1,2 mm long and have a 70 $\mu$m width. There is a central beam and two side beams forming a H-shaped backbone 4 which are relatively thick and robust. Four folded flexures on each corner of the spectrometer serving as suspension means 3 bind the device to the outer frame. These flexures are at 45 ° angle to the side beams. Figure 8 and figure 9 show the dimensional parameters of the device.

Table 1 gives the dimensions and mode frequencies of the proposed devices.

| Dimension | Symbol | Design 1 |
|---|---|---|
| Device Length ($\mu$m) | $D_1$ | 2650 |
| Device Width ($\mu$m) | $D_2$ | 2700 |
| Central beam width ($\mu$m) | $w_b$ | 250 |

(continued)

| Dimension | Symbol | Design 1 |
|---|---|---|
| Side beam width ($\mu$m) | $w_{sb}$ | 250 |
| Comb finger length ($\mu$m) | $L_f$ | 1200 |
| Comb finger width ($\mu$m) | $d_f$ | 70 |
| Gap between comb fingers ($\mu$m) | $g_f$ | 5 |
| Number of fingers | N | 14 |
| Flexure fold length ($\mu$m) | $L_{fl}$ | 1200 |
| Fold corner width ($\mu$m) | $wc_{fl}$ | 30 |
| Fold corner length ($\mu$m) | $dc_{fl}$ | 40 |
| Flexure width ($\mu$m) | $d_{fl}$ | 10 |
| Gap between flexure folds ($\mu$m) | $g_{fl}$ | 20 |

The mechanical, electrical and optical performances of the device were simulated using various simulation tools. The results are given in the following:

Due to the displacement dependent force induced by the comb actuator in out-of-plane translational mode, the spectrometer is a parametric oscillator. This device also exhibits hysteretic frequency response, multiple resonances, subharmonic excitations, etc.

The main objective of performing numerical simulations on the dynamic behaviour of the device is to approximate the driving signal amplitude that would lead to reasonable travel ranges. Figure 2 shows the transient response of the spectrometer when the device is at the peak of its primary parametric resonance. Simulation result shows that sinusoidal excitation of 30 V amplitude provides a travel range of $\pm$ 52 $\mu$m at steady-state. This is a very reasonable result, since both 30 V excitation amplitude and $\pm$ 52 $\mu$m travel range meet our voltage and spectrometer resolution requirements. Q-factor of the device is assumed 20 for the simulations, this is a conservative value for this device and if Q-factor is higher, then operation voltages go down further. We should be able to achieve larger deflections in vacuum during our testing, which means even better spectral resolution.

Figure 3 shows the responsivity simulation results for the spectrometer. A travel range of $\pm$ 52 $\mu$m, which is the typical value extracted from figure 2, leads to a resolution of 0,9 nm at 500 nm (figure 3a). When the wavelength is doubled, the resolution drops by a factor of four (figure 3b).

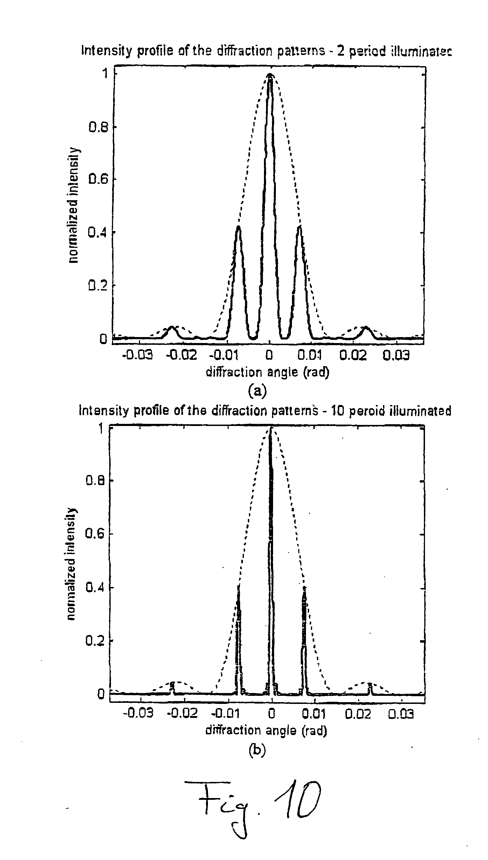

Figure 10 shows the simulation results of separation and the spot-size of the diffraction orders. Figure 10a plots the intensity profile of the diffraction pattern when light is diffracted from only two periods of grating, where in figure 10b, ten gratings are illuminated. For both cases, diffraction angle is constant and equals to 7mRad, but the spot-size of the diffraction orders shrinks as the number of illuminated grating periods increase.

Modal frequencies of the first five mechanical modes are given in Table 2:

Table 2: Mode frequencies of the Fourier Transform Spectrometer

| Mode frequencies (Hz) | | PEA Results |
|---|---|---|
| Out-of-plane Translation | $f_1$ | 1608 |
| Out-of-plane-rocking (around -x) | $f_2$ | 2645 |
| Out-of-plane-rocking (around -y) | $f_3$ | 3034 |
| In-plane Translation (along -x) | $f_4$ | 3080 |
| In-plane Translation (along -y) | $f_5$ | 3084 |

Modal analysis results show that the fundamental oscillation mode of the structure is the out-of-plane translation mode. Moreover, the frequency separation of the modes is sufficiently good. Most important reason behind the good modal characteristics is the four-fold structure. Suppression of the torsional and in-plane translational modes was the biggest advantage of the four-fold design. However, due to the increased stiffness, when compared to the two-fold case, the natural frequency of the device is relatively high, which is the only drawback of the final design.

Due to the large capacitance between comb fingers, this structure may suffer lateral DC pull-in. The pull-in voltage can be reduced by making the gaps between the fingers 1 and 2 larger. Larger gaps also increase the excitation voltage but pull-in voltage has a stronger dependence on the gap width compared to the excitation voltage. Even without any modifications, the device is assumed to have a Q-factor of 20, which is a conservative value. If the Q-factor is > 80, then the required excitation voltage will be < 15 V and pull-in will no longer be a problem. First prototypes are tested in vacuum at lower actuation voltages without the risk of pull-in.

Finally, a shock analysis of the first device was done. The device was assumed to be under a shock of 2000 g for duration of 600 $\mu$sec, which is approximately one period of the out-of-plane translation mode. The shock force was assumed to be uniformly distributed along a perpendicular to the surface of the device. Maximum deflection after the shock was applied turned out to be 270 $\mu$m. Maximum deflection was occurred at time 330 $\mu$sec.

As expected, the stress is concentrated on the corner of the folds of the flexures. A maximum stress of 1,25 GPa is present when the device is deflected most. This is an acceptable stress value for Silicon flexures; however, a further reduction in the flexure width would create some risk for the microfabrication process due to shock problems. A further optimization of the structure will focus on flexure shape optimization (e.g. rounding croners etc.) to reduce the stress, thereby, allowing for thinner flexures and lower natural frequencies.

A comb-actuator based Fourier Lamellar Grating Interferometer is designed. The operation principle of the device is simple and a fabrication process is available. The proposed design can have better than 1 nm spectral resolution in the visible band and better than 9 nm for telecom wavelengths assuming 100 $\mu$m out-of-plane deflection. A thicker SOI wafer can be used to improve the deflection range and the resolution of the spectrometer in future design iterations.

The proposed design has many advantages compared to other spectrometers available in the literature.

- Fabrication and operation principles of the device are simple. This minimizes the size, complexity, cost and design effort of a fully functional system (an operational spectrometer using this device requires integration with a simple photodetector and readout circuit). Only moving part is the resonating MEMS structure.
- Small system size enables portable devices.
- Out-of-plane resonant mode operation of the comb actuators allows for large deflections (high spectral resolution) and high speed while providing a large light collection mirror are compared to other Lamellar Grating Interferometers reported in the literature.
- Due to the operation principle, with slight modifications in the device dimensions, spectrometers for very wide range of wavelength can be realized.

Following further issues about the device are to be addressed:

- Folded flexures are going to be modified in order to minimize the natural frequency and enhance uniform stress distribution along the flexures.
- Gaps between the comb fingers may be increased to larger than 4 $\mu$m in order to increase the pull-in voltage.
- The angle between the flexures and the side beams will be increased to 60 ° to suppress the lateral motion of the fingers. This modification will also lead to an increased pull-in voltage.
- Larger SOI process can improve the maximum achievable deflection and the spectral resolution of the device while lowering natural frequencies.

With the present invention, a MEMS based Fourier transform spectrometer has been described employing a wavelength dispersive element formed by a set of out-of-plane mode electrostatic comb actuators, and a single light sensitive detector. A light beam illuminated on the comb fingers is separated into multiple diffraction orders. Using periodically moving out-of-plane comb fingers, intensity of the central diffraction order is modulated depending on the wavelength content of the incoming light. A MEMS spectrometer can be constructed by detecting the central order intensity with a single detector.

Preferred embodiments of the invention, finally, show some or all of the following features:

- The actuator and movable diffraction grating is designed so that the top and bottom are open to allow the actuator to attain large deflections in resonance without being limited to the thickness of the wafer.
- The spectrometer is configured so that the out-of-plane mode is the fundamental mode and no coupling occurs between different modes.
- The spectrometer forms a broadband operation spectrometer that has an operation range limited only by the coating applied to the mirror and the response range of the detector.

**Claims**

1. A Fourier transform spectrometer, comprising a binary grating, the binary grating being produced by structuring a wafer and having variable depth, the grating comprising a first set of mirrors and a second set of mirrors, wherein both sets of mirrors are carried by fingers (1, 2) of respective comb structures, said comb structures penetrating each other and being part of the spectrometer, the spectrometer further comprising an actuator for prompting an oscillating motion of the second set of mirrors and a detector for detecting a radiation reflected by the grating, wherein the mirrors are orientated in the wafer plane and said motion of the second set of mirrors is given by a translation in a direction vertical to said plane; and wherein the second set of mirrors is elastically connected to the first set of mirrors by suspension means (3).

2. A spectrometer according to claim 1, **characterized in that** the first set of mirrors is a set of fixed mirrors and that the second set of mirrors is a set of movable mirrors.

3. A spectrometer according to one of the proceeding claims, **characterized in that** said actuator is given by an electric comb drive actuator being formed by said comb structure carrying the mirrors.

4. A spectrometer according to one of the preceding claims, **characterized in that** the comb structure carrying the mirrors of the first set of mirrors, the comb structure carrying the mirrors of the second set of mirrors, and the suspension means (3) are formed integrally with one another.

5. A spectrometer according to one of the proceeding claims, **characterized in that** the detector is placed to measure an intensity of a zero order of a diffraction pattern generated by the grating.

6. A spectrometer according to one of the proceeding claims, comprising a control device for applying an alternating voltage between electrodes of said actuator.

7. A spectrometer according to one of the proceeding claims, **characterized in that** the spectrometer comprises at least one silicon layer (4).

8. A spectrometer according to one of the proceeding claims, **characterized in that** the fingers of the comb structure have a length of between 800 $\mu$m and 1600 $\mu$m and/or a width of between 50 $\mu$m and 100 $\mu$m.

9. A method for producing a spectrometer according to one of the proceeding claims, comprising the following steps:

   - structuring a single crystal silicon layer of a silicon-on-insulator wafer so as to produce an oscillating first comb structure for carrying the mirrors of the first set of mirrors, a frame with a second comb structure for carrying the mirrors of the second set of mirrors, and suspension means (3) connecting the oscillating first comb structure with the frame,
   - carrying out a back etching process for removing a supporting substrate and an insulator layer which separates the supporting substrate from said single crystal silicon layer at least below the oscillating first comb structure.

**Patentansprüche**

1. Fourier-Transformationsspektrometer, aufweisend ein binäres Gitter, wobei das Gitter durch Strukturieren eines Wafers hergestellt ist und eine veränderbare Tiefe hat, wobei das Gitter einen ersten Satz von Spiegeln und einen zweiten Satz von Spiegeln aufweist, wobei beide Sätze von Spiegeln durch Finger (1, 2) entsprechender Kammstrukturen getragen werden, wobei besagte Kammstrukturen einander penetrieren und Teil des Spektrometers sind, wobei das Spektrometer weiter einen Aktuator zum Erzeugen einer oszillierenden Bewegung des zweiten Satzes von Spiegeln und einen Detektor zum Detektieren von durch das Gitter reflektierter Strahlung aufweist, wobei die Spiegel in der Wafer-Ebene orientiert sind und besagte Bewegung des zweiten Satzes von Spiegeln durch eine Translation in eine Richtung senkrecht zu besagter Ebene gegeben ist; und wobei der zweite Satz von Spiegeln elastisch mit dem ersten Satz von Spiegeln durch Aufhängemittel (3) verbunden ist.

**2.** Spektrometer nach Anspruch 1, **dadurch gekennzeichnet, dass** der erste Satz von Spiegeln ein Satz von fixierten Spiegeln ist und dass der zweite Satz von Spiegeln ein Satz von beweglichen Spiegeln ist.

**3.** Spektrometer nach einem der vorhergehenden Ansprüche, **dadurch gekennzeichnet, dass** der besagte Aktuator durch einen elektrischen Kammantriebsaktuator gegeben ist, der durch die besagte Kammstruktur gebildet wird, welche die Spiegel trägt.

**4.** Spektrometer nach einem der vorhergehenden Ansprüche, **dadurch gekennzeichnet, dass** die Kammstruktur, welche die Spiegel des ersten Satzes von Spiegeln trägt, die Kammstruktur welche die Spiegel des zweiten Satzes von Spiegeln trägt und die Aufhängemittel (3) integral miteinander gebildet sind.

**5.** Spektrometer nach einem der vorhergehenden Ansprüche, **dadurch gekennzeichnet, dass** der Detektor angeordnet ist, um eine Intensität einer nullten Ordnung eines Diffraktionsmusters zu messen, das durch das Gitter erzeugt wird.

**6.** Spektrometer nach einem der vorhergehenden Ansprüche, aufweisend ein Kontrollgerät zum Anlegen einer Wechselspannung zwischen Elektroden des besagten Aktuators.

**7.** Spektrometer nach einem der vorhergehenden Ansprüche, **dadurch gekennzeichnet, dass** das Spektrometer zumindest eine Silikonschicht (4) aufweist.

**8.** Spektrometer nach einem der vorhergehenden Ansprüche, **dadurch gekennzeichnet, dass** die Finger der Kammstruktur eine Länge von zwischen 800 $\mu$m und 1600 $\mu$m und/oder eine Breite von zwischen 50 $\mu$m und 100 $\mu$m haben.

**9.** Verfahren zum Herstellen eines Spektrometers nach einem der vorhergehenden Ansprüche, aufweisend die folgenden Schritte:

- Strukturieren einer Einkristallsiliciumschicht eines Silicium-auf-Isolator-Wafers um eine oszillierende erste Kammstruktur zum Tragen der Spiegel des ersten Satzes von Spiegeln zu erzeugen, eines Rahmens mit einer zweiten Kammstruktur zum Tragen der Spiegel des zweiten Satzes von Spiegeln, und von Aufhängemitteln (3), welche die oszillierende erste Kammstruktur mit dem Rahmen verbinden,
- Ausführung eines Rückätzprozesses zum Entfernen eines Unterstützenden Substrates und einer Isolatorschicht, welche das unterstützende Substrat von der Einkristallsiliciumschicht trennt, zumindest unter der oszillierenden ersten Kammstruktur.

## Revendications

**1.** Spectromètre à transformée de Fourier, comprenant un réseau binaire, le réseau binaire étant produit en structurant une tranche et ayant une profondeur variable, le réseau comprenant un premier ensemble de miroirs et un second ensemble de miroirs ;
dans lequel les deux ensembles de miroirs sont portés par les doigts (1, 2) de structures en peigne respectives, lesdites structures en peigne pénétrant l'une dans l'autre et faisant partie du spectromètre ;
le spectromètre comprenant en outre un actionneur destiné à provoquer un mouvement oscillant du second ensemble de miroirs, et un détecteur destiné à détecter un rayonnement réfléchi par le réseau ;
dans lequel les miroirs sont orientés dans le plan de la tranche et ledit mouvement du second ensemble de miroirs est fourni par une translation dans une direction verticale par rapport audit plan ; et
dans lequel le second ensemble de miroirs est relié de manière élastique au premier ensemble de miroirs par un moyen de suspension (3).

**2.** Spectromètre selon la revendication 1, **caractérisé en ce que** le premier ensemble de miroirs est un ensemble de miroirs fixes et **en ce que** le second ensemble de miroirs est un ensemble de miroirs mobiles.

**3.** Spectromètre selon l'une des revendications précédentes, **caractérisé en ce que** ledit actionneur est fourni par un actionneur d'entraînement de peigne électrique formé par ladite structure en peigne portant les miroirs.

**4.** Spectromètre selon l'une des revendications précédentes, **caractérisé en ce que** la structure en peigne portant les miroirs du premier ensemble de miroirs, la structure en peigne portant les miroirs du second ensemble de miroirs et le moyen de suspension (3), sont formés ensemble d'une pièce.

5. Spectromètre selon l'une des revendications précédentes, **caractérisé en ce que** le détecteur est placé pour mesurer une intensité d'ordre zéro d'un motif de diffraction produit par le réseau.

6. Spectromètre selon l'une des revendications précédentes, comprenant un dispositif de commande destiné à appliquer une tension alternative entre les électrodes dudit actionneur.

7. Spectromètre selon l'une des revendications précédentes, **caractérisé en ce que** le spectromètre comprend au moins une couche de silicium (4).

8. Spectromètre selon l'une des revendications précédentes, **caractérisé en ce que** les doigts de la structure en peigne ont une longueur comprise entre 800 $\mu$m et 1600 $\mu$m et/ou une largeur comprise entre 50 $\mu$m et 100 $\mu$m.

9. Procédé destiné à fabriquer un spectromètre selon l'une des revendications précédentes, comprenant les étapes suivantes :

   - structurer une couche de silicium monocristallin d'une tranche de silicium sur isolant de façon à produire une première structure en peigne oscillante pour porter les miroirs du premier ensemble de miroirs, un bâti avec une seconde structure en peigne pour porter les miroirs du second ensemble de miroirs, et un moyen de suspension (3) qui relie la première structure en peigne oscillante au bâti ;
   - exécuter un processus de gravure arrière pour retirer un substrat de support et une couche isolante qui sépare le substrat de support de ladite couche de silicium monocristallin au moins en dessous de la première structure en peigne oscillante.

Fig. 1

Fig. 2

travel range : [-52um,52um], 500nm + 500.9nm

(a)

travel range : [-50um,50um], 1000nm + 1004nm

(b)

Fig. 3

Fig. 4

Fig. 5

Fig. 6

Fig. 7

$$Fig. 8$$

$$Fig. 9$$

Intensity profile of the diffraction patterns - 2 period illuminated

(a)

Intensity profile of the diffraction patterns - 10 peroid illuminated

(b)

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **O. MANZARDO ; R. MICHAELY ; F. SCHÄDELIN ; W. NOELL ; TH. OVERSTOLZ ; N. DE ROOIJ ; H.P. HERZIG.** Miniature lamellar grating interferometer based on silicon technology. *Optics Letters,* 01 July 2004, vol. 29 (13), 1437-1439

- **R. HOFFMANN ; S. DRAPATZ ; K.W. MICHEL.** Lamellar grating Fourier spectrometer for a balloon-borne telescope. *Infrared Physics,* 1977, vol. 17, 451-456